# EUROPEAN PATENT SPECIFICATION

(11) **EP 2 525 534 B1**
(45) Date of publication and mention of the grant of the patent: **18.04.2018**
(21) Application number: 11166496.7
(22) Date of filing: 18.05.2011
(51) Int. Cl.: H04L 12/869, H04L 12/863, H04L 12/931, H04L 12/937, H04L 12/861

(54) **NETWORK TRAFFIC SCHEDULER AND ASSOCIATED METHOD, COMPUTER PROGRAM AND COMPUTER PROGRAM PRODUCT**
NETZWERKVERKEHRSPLANER UND ZUGEHÖRIGES VERFAHREN, COMPUTERPROGRAMM UND COMPUTERPROGRAMMPRODUKTE
PROGRAMMATEUR DE TRAFIC DE RÉSEAU ET PROCÉDÉ ASSOCIÉ, PROGRAMME INFORMATIQUE ET PRODUIT DE PROGRAMME INFORMATIQUE

(43) Date of publication of application: 21.11.2012
(73) Proprietor: Xelerated NewCo AB, 111 22 Stockholm (SE)
(72) Inventor: Livne, Sarig, 52222, RAMAT GAN (IL); Sukonik, Vitaly, 37861, KATZIR (IL); Ophir, Einat, 40600, TelMond (IL)
(74) Representative: Grünecker Patent- und Rechtsanwälte PartG mbB

(56) References cited:
- US-A1- 2010 278 190
- US-B1- 6 487 213
- US-B1- 7 969 884

## Description

### TECHNICAL FIELD

The invention relates to network traffic scheduling.

### BACKGROUND

In traffic scheduling for communications networks, traffic from a large number of inputs often needs to be multiplexed to a single output. This can be effected using a multi-level scheduling hierarchy. Using a variety of parameters, network operators may configure scheduling hierarchies such that the bandwidth, delay and jitter (delay variation) experienced by network users complies with service level agreements.

The patent application WO-2009/130218 presents a method for a traffic manager, where the method comprises reading a first data packet comprised in a first queue based on a scheduling priority, the scheduling priority being determined: at least partly on a configured priority of the first queue, at least partly on a first meter value of a first meter associated with the first queue; and at least partly on a second meter value of a second meter associated with a first scheduling node; the first scheduling node being a parent node of the first queue. Desired changes in behaviour of the traffic manager can be effected by changing priority level.

However, there is a need for a more flexible way of configuring selection in a hierarchy for traffic scheduling.

US 6 487 213 B1 relates to a technique for fairly arbitrating contention for an output port. The technique uses a hierarchal arbitration method having arbiters at each layer of the hierarchy that employ an arbitration scheme. Arbitration between multiple cells having different priorities is mentioned. For the arbitration, a tree structure is formed. A first layer includes eight arbiters, also referred to as leaf arbiters. The next layers include intermediate arbiters. The last layer includes a single root arbiter. Two input arbiters contain an internally fed back flag signal that indicates which input request is favored. Once an input is granted in an arbitration cycle, the other input will be favored in the next cycle, as indicated by a truth table. Grant signals in each arbiter may be modified by logically ANDing them with the received group grant signal from the next higher level.

US 2010/278190 A1 discloses a hierarchical pipelined distributed scheduling traffic manager that includes multiple hierarchical levels to perform hierarchical winner selection and propagation in a pipeline including selecting and propagating winner queues of a lower level to subsequent levels to determine one final winning queue. The winner selection and propagation is performed in parallel between the levels to reduce the time required in selecting the final winning queue. In some embodiments, the hierarchical traffic manager is separated into multiple separate sliced hierarchical traffic managers to distributively process the traffic.

The object of the present invention is to provide a scheduling technique for network traffic providing increased fairness and flexibility.

This object is solved by the subject matter of the independent claims.

Preferred embodiments are defined by the dependent claims.

### SUMMARY

An object of the invention is to alleviate some of the problems laid forth above.

In a first aspect, it is presented a method for a network traffic scheduler to select a winning input node, the network traffic scheduler comprising a node hierarchy comprising: a plurality of input nodes; an output node at a top level of the hierarchy; a plurality of intermediate nodes, wherein a subset of the intermediate nodes comprises intermediate nodes being connected to at least one lower level node and one higher level node. The method comprises the steps, for each of the intermediate nodes of the subset, of: selecting a lower level node as a winning node to be forwarded to the higher level node; obtaining a set of input parameters, the input parameters comprising input data being associated with the winning node; obtaining output parameters by finding a matching row in a lookup table using the input parameters as a key, the lookup table being applicable for all combinations of input parameters; and providing the output parameters to the higher level node, wherein, when the higher level node is an intermediate node, at least a subset of the output parameters are used as input parameters for the higher level node.

By using lookup tables, the relationship between input parameters and output parameters is much more flexible than in the prior art. This allows for implementation of all currently known useful functions, but also allows definition of completely new functions in the future.

In the step of obtaining output parameters, the lookup table may be one of a plurality of predefined lookup tables selected to be active for the respective intermediate node. This is an efficient way to define what function should be applied.

In the step of obtaining output parameters, the lookup table may be a freely configurable table. In other words, any output parameters can be defined for each combination of input parameters.

An output parameter may be an eligibility parameter, which is calculated by performing an AND operation of an eligibility from the matching row of the lookup table and an input eligibility parameter of the winning node.

The output parameters may comprise a propagated priority of the respective intermediate node.

The output parameters may comprise a scheduling priority.

The input parameters may comprise a propagated priority of the winning node.

The input parameters may comprise a minimum token bucket parameter and a maximum token bucket parameter.

Each of the input nodes may correspond to a packet queue.

In the step of obtaining a set of input parameters, the input parameters may further comprise internal state parameters of the respective intermediate node. This can for example be token bucket states, such as for minimum and maximum token buckets.

The method may further comprise the step, for each of the intermediate nodes of the subset, of: updating the internal state parameter due to the selection of winning input node in the entire network traffic scheduler.

The method may further comprise the step, for each of the intermediate nodes of the subset, of: updating the internal state parameters when a winning lower level node is selected.

All the input nodes may be provided on a single input level of the hierarchy.

A second aspect is a network traffic scheduler arranged to select a winning input node, the network traffic scheduler comprising a node hierarchy. The node hierarchy comprises: a plurality of input nodes; an output node at a top level of the hierarchy; a plurality of intermediate nodes, wherein a subset of the intermediate nodes comprises intermediate nodes being connected to at least one lower level node and one higher level node. Each intermediate nodes of the subset respectively comprises: a scheduling module arranged to select a lower level node as a winning node to be forwarded to the higher level node; a state calculation module arranged to: obtain a set of input parameters, the input parameters comprising input data being associated with the winning node; obtain output parameters by finding a matching row in a lookup table using the input parameters as a key, the lookup table being applicable for all combinations of input parameters; and provide the output parameters to the higher level node. When the higher level node is an intermediate node, at least a subset of the output parameters are arranged to be used as input parameters for the higher level node.

The input parameters may further comprise internal state parameters of the respective intermediate node.

A third aspect is a computer program for a network traffic scheduler to select a winning input node, the network traffic scheduler comprising a node hierarchy comprising: plurality of input nodes; an output node at a top level of the hierarchy; a plurality of intermediate nodes. A subset of the intermediate nodes comprises intermediate nodes being connected to at least one lower level node and one higher level node. The computer program comprises computer program code which, when run on the network traffic scheduler, causes the network traffic scheduler to perform the steps of: selecting a lower level node as a winning node to be forwarded to the higher level node; obtaining a set of input parameters, the input parameters comprising input data being associated with the winning node; obtaining output parameters by finding a matching row in a lookup table using the input parameters as a key, the lookup table being applicable for all combinations of input parameters; and providing the output parameters to the higher level node, wherein, when the higher level node is an intermediate node, at least a subset of the output parameters are used as input parameters for the higher level node.

A fourth aspect is a computer program product comprising a computer program according to the third aspect and a computer readable means on which the computer program is stored.

It is to be noted that the term subset is not to be interpreted as proper subset, whereby a subset of the intermediate nodes is to be interpreted as some or all of the intermediate nodes.

It is to be noted that any feature of the first, second, third and fourth aspects may, where appropriate, be applied to any other of these aspects.

Generally, all terms used in the application are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram disclosing a logical hierarchy of a network traffic scheduler according to one embodiment;
Fig 2 is a schematic diagram disclosing logical components of an intermediate node of the logical hierarchy of Fig 1;
Fig 3 is a schematic diagram illustrating how a lookup table can be selected by a state calculation module of the intermediate node of Fig 2;
Fig 4 is a flow chart illustrating a method performed in the intermediate node of Fig 2; and
Fig 5 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

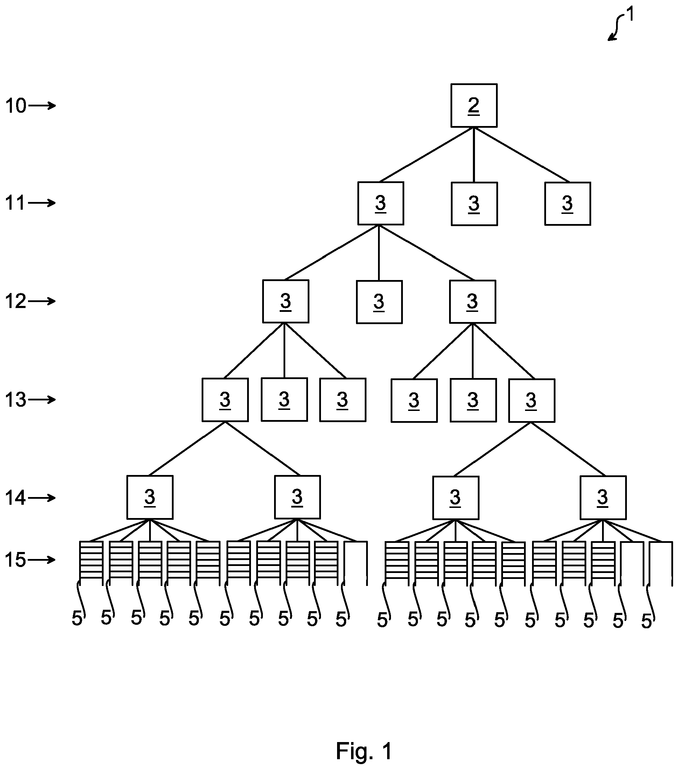

Fig 1 is a schematic diagram disclosing a logical hierarchy of a network traffic scheduler 1 according to one embodiment. The logic of network traffic scheduler 1 connects one input node 5 to an output node 2, via a number of intermediate nodes 3 to thereby select a winning node to schedule traffic. The input nodes 5 are here provided on an input level 15 and the output node 2 is provided on an output level 10. Intermediate nodes 3 are provided on intermediate levels 11-14.

Each input node 5 can correspond to a queue for storing data that is associated with a data source or a data recipient, such as a user or a user-specific service. The data may be individual data packets or datagrams, such as IP packets, ATM frames, Frame Relay Protocol data units (PDU), Ethernet packets or any other packet switched data. Optionally, several individual data packets can be grouped together in packages for easier handling. In other words, data is selected for dequeuing by the network traffic scheduler 1 one data unit at a time, where each data unit can comprise a single data packet or each data unit can be a package comprising several data packets.

While the hierarchy is here shown with input nodes all being provided on the same input level 15, the hierarchy could also be arranged with inputs provided at different levels 11-15 under the output level 10.

Regardless of where the input nodes 5 are provided, a plurality of intermediate nodes 3 are provided between the input nodes 5 and the output node 2 to effect scheduling and shaping of data.

The logical hierarchy is shown to illustrate the selection process where one of a plurality of queues 5 is selected to supply data to an output node 2 of the network traffic scheduler 1. It is to be noted that in implementation, there are no be physical components corresponding to the nodes in the hierarchy; instead the hierarchy can be implemented using software and/or hardware e.g. using a network processor, application-specific integrated circuit (ASIC), field-programmable gate array (FPGA) or central processing unit (CPU).

The network traffic scheduler can for instance be configured to provide a desired connectivity service, e.g. by ensuring that the bandwidth complies with service level agreements of attached users. The services level agreements can describe quality of service parameters such as minimum bandwidth, maximum bandwidth, latency, jitter and loss probability for traffic received from or transmitted to a network user. The service level agreements can differ between users.

Data made available on the input nodes 5 are made available for scheduling and dequeuing, whereby a selected data unit is dequeued from its input node and transferred to the output node 2. The selection is performed using the intermediate nodes 3 of the hierarchy to control the dequeuing of data as determined by the network traffic scheduler 1.

While the hierarchy of Fig 1 is disclosed using six levels 10-15, any number of levels can be used, as long as there are intermediate nodes 3 provided between input nodes 5 and the output node 2.

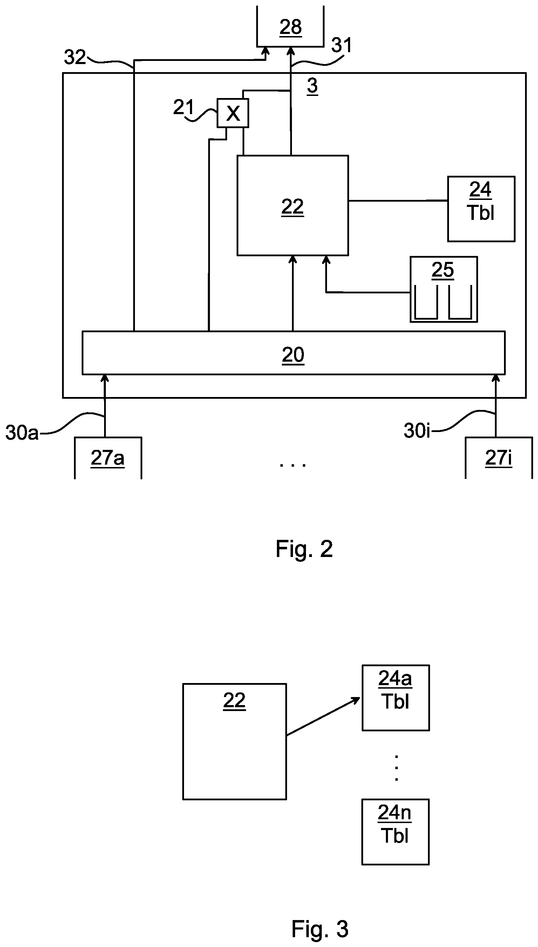

Fig 2 is a schematic diagram disclosing logical components of an intermediate node 3 of the logical hierarchy of Fig 1. The intermediate node is connected to at least one lower level node 27a-i, and one higher level node 28. The lower level node/nodes can be input nodes 5 or other intermediate nodes 3. The higher level node 28 can be the output node 2 or other intermediate nodes 3.

The intermediate node 3 comprises a scheduling module 20 arranged to select one of the at least one lower level node 27a-i as a winning node to be forwarded to the higher level node 28.

To effect the selection, the intermediate node 3 can utilise one or more of the following input parameters 30a-i received as output parameters from the lower level nodes 27a-i and/or internal parameters.

One parameter is an eligibility parameter which is a flag associated with each lower level node 27a-i. The eligibility parameter indicates whether the lower level node 27a-i is allowed to be selected or not.

Another parameter is scheduling priority, which is associated with each lower level node 27a-i. Scheduling priority can be used to handle delay sensitive and high priority traffic. In one embodiment, three bits are used for scheduling priority, which gives eight possible values for the scheduling priority. Other number of scheduling priorities can also be used. When propagated priority (see below) is not used, using scheduling priority is one way to handle delay sensitive traffic by configuring scheduling priority nodes all the way through the hierarchies.

Another parameter is propagated priority, also associated with each lower level node 27a-i. Propagated priority can be used to handle delay sensitive traffic in a user oriented scheduling hierarchy. In a hierarchy where a certain user queue is used for traffic of certain service class, it is difficult to provide low latency for delay sensitive traffic just by reserving bandwidth at all upper levels. Propagated priority effects this in more efficient way.

In addition to eligibility, propagated priority is, as suggested by the name, propagated to the higher level node, from which it is propagated further. Intermediate nodes 3 will prefer lower level nodes with higher propagated priority to child nodes with lower propagated priority queues. This enables delay sensitive data to be served faster. The manner in which propagated priority is propagated is optionally configurable per node or per level. The use of lookup tables as is explained in more detail below.

Moreover, internal state parameters can optionally be used by the scheduling module 20 to select a winner from the lower level nodes 27a-i, using e.g. round robin or DWRR (Deficit Weighted Round Robin).

A round robin scheme can be used to achieve a degree of fairness between the lower level nodes 27a-i. It is used as default at all levels and priorities. In case round robin scheduling is used among nodes with significantly different packet sizes, the scheduled bandwidth of nodes with large packets is significantly larger than the scheduled bandwidth of nodes with small packets, and jitter can be created. In that case other scheduling methods can be applied, such as DWRR.

DWRR is an implementation of WFQ (weighted fair queuing). It provides fair sharing of bandwidth in a work conserving manner and permits configuration of bandwidth ratios by means of weights. DWRR is particularly useful in an oversubscribed scenario.

In an oversubscribed scenario the demand for bandwidth is higher than the available bandwidth at least some of the time.

Unlike the bandwidth resulting from shaping, e.g. implemented using token buckets as described below, the bandwidth from DWRR scheduling can vary over time, even if accurate ratios are maintained. Oversubscription scenarios are based on statistic multiplexing and this creates congestion conditions that vary in their length and severity. However, the algorithm results in that over a long period of time, the bandwidth ratios of the nodes that are competing for the limited bandwidth resource are accurate.

In both round robin and DWRR, an internal state is kept by the scheduling module 20, e.g. to know which lower level node 27a-i was last served.

Once a winning lower level node has been selected by the scheduling module 20, a state calculation module 22 can be used to obtain output parameters to provide to the higher level node 28.

The state calculation module 22 obtains a set of input parameters, wherein the input parameters comprises input data being associated with the winning node, such as one or more of the parameters described above. Optionally, internal state parameters 25 of the intermediate node 3 are also obtained.

The internal state parameters 25 can for example be dual token bucket data 25 for minimum and maximum shaping in accordance with service level agreements. For example, a minimum committed bandwidth can be handled using a min token bucket and is referred to as min bandwidth, e.g. represented by one bit. An excess bandwidth can be handled by a max token bucket and is referred to as max bandwidth, e.g. represented by one bit. The intermediate node thus uses the min token bucket for bandwidth guarantee and the max token bucket the excess bandwidth rate shaping.

Min token bucket is used to control the guaranteed bandwidth. This bandwidth is provided under any condition unless it is oversubscribed. Max token bucket is used to limit a specific node to a specific maximum bandwidth. This is required in case other nodes do not have data, but still preventing a lower level node from using all the available bandwidth in violation of its service level agreement, or because it is not desirable that it consumes the higher intermediate node bandwidth (tokens) that will be required at a later time for more important traffic. Min conforming nodes are preferred (have strict priority) over max conforming nodes. At each intermediate node, all min nodes (nodes with conforming min token bucket) are served before any max node (node with non-conforming min token bucket and conforming max token bucket). This scheme ensures that min bandwidth is provided before any max bandwidth.

Using the input parameters, the state calculation module 22 obtains output parameters 31 by finding a matching row in a lookup table 24. The input parameters are used as a key or address to find the output parameters 31 to use. The lookup table 24 is structured such that it is applicable for all combinations of input parameters.

For example, if the input parameters for state calculation are propagated priority (three bits), min token bucket (one bit) and max token bucket (one bit), there are five bits for the input parameters, which results in 2^5 = 32 possible combinations of input parameters. The lookup table 24 can then use the input parameters as table key and may in this example have 32 rows to cover all possible values of input parameters, where output parameters are provided in each row. Optionally, associative memory with wildcards can be used to reduce the number of rows and still cover all possible values of input parameters.

Output parameters may for example include propagated priority (three bits), scheduled priority (three bits) and eligibility (one bit). Optionally, two bits can be output to update min and max token buckets for the higher level node, respectively. In this example, the output parameters thus consist of seven or nine bits.

It is to be noted that the number of bits for each parameter presented herein are mere examples and can, in each implementation, be freely selected for each parameter to be any suitable number of bits.

The lookup table 24 thus defines the output parameters for each value of input parameters, in effect providing a flexible way of defining a function f for output parameters = f(input parameters).

At least some of the output parameters 31 provided to the higher level node 28 are used as input parameters for the higher level node 28, unless the higher level node is the output node 2.

One parameter of the output parameters 31 can be the eligibility parameter. The eligibility parameter can be calculated by performing an AND operation, in a multiplier or AND gate 21, of an eligibility from the matching row of the lookup table and an input eligibility parameter of the winning node.

An identity 32 of the winning node is also provided to the higher level node. The winning node identity of each level is propagated upwards in the hierarchy in this way, such that eventually a winning node of the entire hierarchy is determined.

Fig 3 is a schematic diagram illustrating how the lookup table is selected by the state calculation module 22 of the intermediate node 3 of Fig 2. The intermediate node 3 comprises a plurality of predefined lookup tables 24a-n. Each such predefined lookup table thus defines a function for state calculation. Each intermediate node 3 is configured to select an active one of the predefined lookup tables 24a-n. The selected lookup table is used when determining the output parameters. This configuration can be completely static. Alternatively, it may be configured at boot time or reconfigured dynamically on demand, potentially after each data unit dequeuing. The dynamic selection can be controlled by an external control device.

Optionally, instead of selecting a desired lookup table, the content of the lookup table can be altered to effect the desired function. In other words, in such an embodiment, the lookup table is a freely configurable table.

By means of this selectable behaviour of the state calculation, a completely new level of flexibility is provided. The selection of function using the lookup tables can be performed uniformly for all intermediate nodes, separately for each level in the hierarchy or separately for each individual intermediate node.

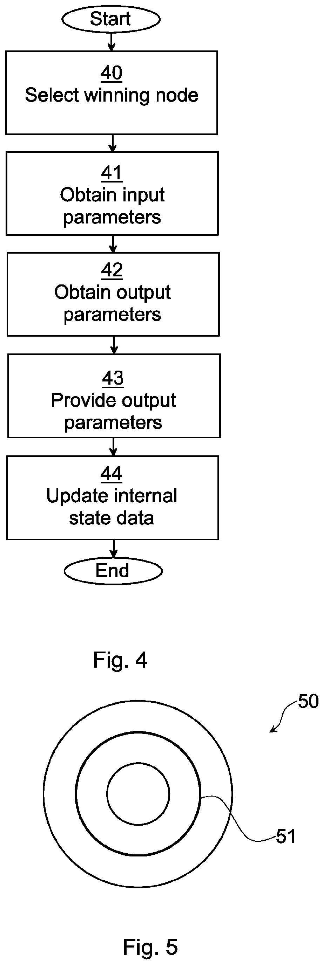

Fig 4 is a flow chart illustrating a method performed in the intermediate node of Fig 2. The method can be performed in each of the intermediate nodes of Fig 1 and can be implemented in hardware and/or software.

In an initial select winning node step 40, one of the lower level nodes is selected as a winning node to be forwarded to the higher level node. This selection is performed as described above with reference to the scheduling module 20.

In an obtain input parameters step 41, a set of input parameters 41 are obtained, as described above with reference to the state calculation module 22. The input parameters can comprise input data being associated with the winning node and optionally internal state data of the respective intermediate node.

In an obtain output parameters step 42, output parameters are obtained by finding a matching row in the lookup table using the input parameters as a key, as described above.

In a provide output parameters step 43, the output parameters obtained in the preceding step 42 are provided to the higher level node.

In an optional update internal state data step 44, the internal state data, such as the min token bucket and max token bucket are updated. This can occur as a response to selection of winning input node in the entire network traffic scheduler, or when a winning lower level node is selected.

Fig 5 shows one example of a computer program product 60 comprising computer readable means. On this computer readable means a computer program 51 can be stored, which computer program can cause a controller to execute a method according to embodiments described herein. In this example, the computer program product 50 is an optical disc, such as a CD (compact disc) or a DVD (digital versatile disc) or a Blu-Ray disc. As explained above, the computer program product could also be embodied as a memory of the network traffic scheduler. While the computer program 51 is here schematically shown as a track on the depicted optical disk, the computer program 51 can be stored in any way which is suitable for the computer program product 50.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for a network traffic scheduler to select a winning input node, the network traffic scheduler comprising a logical hierarchy of nodes comprising: a plurality of input nodes (5); an output node (2) at a top level of the hierarchy; a plurality of intermediate nodes (3), wherein a subset of the intermediate nodes comprises intermediate nodes (3) being connected to at least one lower level node (27a-i) and one higher level node (28), the method comprising the steps, for each of the intermediate nodes of the subset, of:
selecting (40) a lower level node as a winning node to be forwarded to the higher level node (28), wherein the selecting is effected by utilizing one or more of a set of input parameters (40) received from at least one lower level node, and the input parameters comprise at least one of an eligibility parameter, a scheduling priority, and a propagated priority, wherein the propagated priority is propagated to the higher level node (28); obtaining the set of input parameters (41), the input parameters comprising input data being associated with the winning node;
obtaining output parameters (42) by finding a matching row in a lookup table (24, 24a-n) using the input parameters as a key, the lookup table (24, 24a-n) being applicable for all combinations of input parameters and providing a flexible way of defining a function f for output parameters, wherein the lookup table (24, 24a-n) is one of a plurality of predefined lookup tables (24a-n) selected to be active for the respective intermediate node (3) and wherein the selection of function using one of the plurality of predefined lookup tables (24, 241-n) is performed uniformly for all intermediate nodes (3), separately for each level in the hierarchy or separately for each individual intermediate node (3); and
providing the output parameters (43), the output parameters comprising at least one of the eligibility parameter, the scheduling priority, and the propagated priority, to the higher level node (28), wherein the eligibility parameter is calculated by performing an AND operation of an eligibility from the matching row of the lookup table and an input eligibility parameter of the winning node and wherein, when the higher level node is an intermediate node (3), at least a subset of the output parameters are used as input parameters for the higher level node (28).

2. The method according to claim 1, wherein in the step of obtaining output parameters, the lookup table is a freely configurable table.

3. The method according to any one of the preceding claims, wherein the input parameters comprise a minimum token bucket parameter and a maximum token bucket parameter.

4. The method according to any one of the preceding claims wherein each of the input nodes (5) corresponds to a packet queue.

5. The method according to any one of the preceding claims, wherein in the step (41) of obtaining a set of input parameters, the input parameters further comprise internal state parameters (25) of the respective intermediate node.

6. The method according to claim 5, further comprising the step, for each of the intermediate nodes of the subset, of: updating the internal state parameter (25) due to the selection of winning input node in the entire network traffic scheduler.

7. The method according to claim 5 or 6, further comprising the step, for each of the intermediate nodes of the subset, of: updating the internal state parameters (25) when a winning lower level node is selected.

8. The method according to any one of the preceding claims, wherein all the input nodes are provided on a single input level (15) of the hierarchy.

9. A network traffic scheduler (1) arranged to select a winning input node (2), the network traffic scheduler comprising a logical hierarchy of nodes comprising:
a plurality of input nodes (5);
an output node (2) at a top level of the hierarchy;
a plurality of intermediate nodes (3), wherein a subset of the intermediate nodes comprises intermediate nodes (3) being connected to at least one lower level node (27a-i) and one higher level node (28), wherein each intermediate nodes (3) of the subset respectively comprises:
a scheduling module (20) arranged to select a lower level node (27a-i) as a winning node to be forwarded to the higher level node (28), wherein the selecting is effected by utilizing one or more of a set of input parameters (40) received from at least one lower level node, and the input parameters comprise at least one of an eligibility parameter, a scheduling priority, and a propagated priority, wherein the propagated priority is propagated to the higher level node (28); a state calculation module (22) arranged to: obtain the set of input parameters, the input parameters comprising input data being associated with the winning node, wherein the input parameters comprise a propagated priority which is propagated to the higher level node from which it is propagated further; obtain output parameters (31) by finding a matching row in a lookup table (24, 24a-n) using the input parameters as a key, the lookup table (24, 24a-n) being applicable for all combinations of input parameters and providing a flexible way of defining a function f for output parameters, wherein the lookup table is one of a plurality of predefined lookup tables (24a-n) selected to be active for the respective intermediate node (3) and wherein the selection of function using one of the plurality of predefined lookup tables (24, 241-n) is performed uniformly for all intermediate nodes (3), separately for each level in the hierarchy or separately for each individual intermediate node (3); and provide the output parameters (31), the output parameters comprising at least one of the eligibility parameter, the scheduling priority, and the propagated priority, to the higher level node (28), wherein the eligibility parameter is calculated by performing an AND operation of an eligibility from the matching row of the lookup table and an input eligibility parameter of the winning node and wherein, when the higher level node is an intermediate node (3), at least a subset of the output parameters are arranged to be used as input parameters for the higher level node (28).

10. The network traffic scheduler (1) according to claim 9, wherein the input parameters further comprise internal state parameters (25) of the respective intermediate node.

11. A computer program (51) for a network traffic scheduler to select a winning input node, the network traffic scheduler comprising a logical hierarchy of nodes comprising: plurality of input nodes (5); an output node (2) at a top level of the hierarchy; a plurality of intermediate nodes (3), wherein a subset of the intermediate nodes comprises intermediate nodes (3) being connected to at least one lower level node (27a-i) and one higher level node (28), the computer program comprising computer program code which, when run on the network traffic scheduler, causes the network traffic scheduler to perform the steps of:
selecting (40) a lower level node as a winning node to be forwarded to the higher level node (28), wherein the selecting is effected by utilizing one or more of a set of input parameters (40) received from at least one lower level node, and the input parameters comprise at least one of an eligibility parameter, a scheduling priority, and a propagated priority, wherein the propagated priority is propagated to the higher level node (28); obtaining the set of input parameters (41), the input parameters comprising input data being associated with the winning node;
obtaining output parameters (42) by finding a matching row in a lookup table (24, 24a-n) using the input parameters as a key, the lookup table (24, 24a-n) being applicable for all combinations of input parameters and providing a flexible way of defining a function f for output parameters, wherein the lookup table is one of a plurality of predefined lookup tables (24a-n) selected to be active for the respective intermediate node (3) and wherein the selection of function using one of the plurality of predefined lookup tables (24, 241-n) is performed uniformly for all intermediate nodes (3), separately for each level in the hierarchy or separately for each individual intermediate node (3); and
providing the output parameters (43), the output parameters comprising at least one of the eligibility parameter, the scheduling priority, and the propagated priority, to the higher level node (28), wherein the eligibility parameter is calculated by performing an AND operation of an eligibility from the matching row of the lookup table and an input eligibility parameter of the winning node and wherein, when the higher level node is an intermediate node (3), at least a subset of the output parameters are used as input parameters for the higher level node (28).

12. A computer program product (50) comprising a computer program (51) according to claim 11 and a computer readable means on which the computer program is stored.

## Patentansprüche

1. Verfahren für einen Netzwerkverkehrsplaner zum Auswählen eines gewinnenden Eingangsknotens, wobei der Netzwerkverkehrsplaner eine logische Hierarchie von Knoten umfasst, die umfassen: eine Vielzahl von Eingangsknoten (5), einen Ausgangsknoten (2) auf einer höchsten Ebene der Hierarchie, eine Vielzahl von mittleren Knoten (3), wobei ein Teilsatz der mittleren Knoten mittlere Knoten (3), die mit wenigstens einem Knoten (27a-i) einer niedrigeren Ebene und einem Knoten (28) einer höheren Ebene verbunden sind, umfasst, wobei das Verfahren die folgenden Schritte für jeden der mittleren Knoten des Teilsatzes umfasst:
Auswählen (40) eines Knotens einer niedrigeren Ebene als eines gewinnenden Knotens für das Weiterleiten an den Knoten (28) einer höheren Ebene, wobei das Auswählen bewerkstelligt wird, indem einer oder mehrere eines Satzes von Eingangsparametern (40), die von wenigstens einem Knoten einer niedrigeren Ebene empfangen werden, verwendet werden, und wobei die Eingangsparameter einen Auswählbarkeitsparameter, eine Planungspriorität und/oder eine fortgepflanzte Priorität umfassen, wobei die fortgepflanzte Priorität zu dem Knoten (28) einer höheren Ebene fortgepflanzt wird,
Erhalten des Satzes von Eingangsparametern (41), wobei die Eingangsparameter Eingangsdaten, die mit dem gewinnenden Knoten assoziiert sind, umfassen,
Erhalten von Ausgangsparametern (42) durch das Finden einer entsprechenden Reihe in einer Nachschlagetabelle (24, 24a-n) unter Verwendung der Eingangsparameter als eines Schlüssels, wobei die Nachschlagetabelle (24, 24a-n) für alle Kombinationen von Eingangsparametern anwendbar ist und eine flexible Möglichkeit zum Definieren einer Funktion f für Ausgangsparameter vorsieht, wobei die Nachschlagetabelle (24, 24a-n) eine aus einer Vielzahl von vordefinierten Nachschlagetabellen (24a-n) ist, die ausgewählt wird, um für den entsprechenden mittleren Knoten (3) aktiv zu sein, und wobei die Auswahl der Funktion unter Verwendung einer aus der Vielzahl von vordefinierten Nachschlagetabellen (24, 24a-n) für alle mittleren Knoten (3) gleich und separat für jede Ebene in der Hierarchie oder separat für jeden einzelnen mittleren Knoten (3) durchgeführt wird, und
Vorsehen der Ausgangsparameter (43), wobei die Ausgangsparameter den Wählbarkeitsparameter, die Planungspriorität und/oder die fortgepflanzte Priorität umfassen, zu dem Knoten (28) einer höheren Ebene, wobei der Wählbarkeitsparameter berechnet wird durch das Durchführen einer UND-Operation einer Wählbarkeit aus der entsprechenden Reihe der Nachschlagetabelle und eines Eingangswählbarkeitsparameters des gewinnenden Knotens und wobei, wenn der Knoten einer höheren Ebene ein mittlerer Knoten (3) ist, wenigstens ein Teilsatz der Ausgangsparameter als Eingangsparameter für den Knoten (28) der höheren Ebene verwendet wird.

2. Verfahren nach Anspruch 1, wobei in dem Schritt zum Erhalten von Ausgangsparametern die Nachschlagetabelle eine frei konfigurierbare Tabelle ist.

3. Verfahren nach einem der vorstehenden Ansprüche, wobei die Eingangsparameter einen Minimales-Token-Bucket-Parameter und einen Maximales-Token-Bucket-Parameter umfassen.

4. Verfahren nach einem der vorstehenden Ansprüche, wobei jeder der Eingangsknoten (5) einer Paketwarteschlage entspricht.

5. Verfahren nach einem der vorstehenden Ansprüche, wobei in dem Schritt (41) zum Erhalten eines Satzes von Eingangsparametern die Eingangsparameter weiterhin Interner-Zustand-Parameter (25) des entsprechenden mittleren Knotens umfassen.

6. Verfahren nach Anspruch 5, das weiterhin einen Schritt, für jeden der mittleren Knoten des Teilsatzes, umfasst zum Aktualisieren des Interner-Zustand-Parameters (25) aufgrund des Auswählens des gewinnenden Eingangsknotens in dem gesamten Netzwerkverkehrsplaner.

7. Verfahren nach Anspruch 5 oder 6, das weiterhin den Schritt für jeden aus dem mittleren Knoten des Teilsatzes umfasst zum Aktualisieren der Interner-Zustand-Parameter (25), wenn ein gewinnender Knoten einer niedrigeren Ebene ausgewählt wird.

8. Verfahren nach einem der vorstehenden Ansprüche, wobei alle die Eingangsknoten auf einer einzelnen Eingangsebene (15) der Hierarchie vorgesehen sind.

9. Netzwerkverkehrsplaner (1), der angeordnet ist zum Auswählen eines gewinnenden Eingangsknotens (2), wobei der Netzwerkverkehrsplaner eine logische Hierarchie von Knoten umfasst, die umfassen:
eine Vielzahl von Eingangsknoten (5),
einen Ausgangsknoten (2) auf einer höchsten Ebene der Hierarchie,
eine Vielzahl von mittleren Knoten (3), wobei ein Teilsatz der mittleren Knoten mittlere Knoten (3), die mit wenigstens einem Knoten (27a-i) einer niedrigeren Ebene und einem Knoten (28) einer höheren Ebene verbunden sind, umfasst, wobei jeder mittlere Knoten (3) des Teilsatzes jeweils umfasst:
ein Planungsmodul (20), das angeordnet ist zum Auswählen eines Knotens (27a-i) einer niedrigeren Ebene als eines gewinnenden Knotens für das Weiterleiten zu dem Knoten (28) einer höheren Ebene, wobei das Auswählen bewerkstelligt wird, indem einer oder mehrere eines Satzes von Eingangsparametern (40), die von wenigstens einem Knoten einer niedrigeren Ebene empfangen werden, verwendet werden, und wobei die Eingangsparameter einen Auswählbarkeitsparameter, eine Planungspriorität und/oder eine fortgepflanzte Priorität umfassen, wobei die fortgepflanzte Priorität zu dem Knoten (28) einer höheren Ebene fortgepflanzt wird,
ein Zustandsberechnungsmodul (22), das angeordnet ist zum Erhalten des Satzes von Eingangsparametern, wobei die Eingangsparameter Eingangsdaten, die mit dem gewinnenden Knoten assoziiert sind, umfassen und wobei die Eingangsparameter eine fortgepflanzte Priorität, die zu dem Knoten einer höheren Ebene fortgepflanzt wird, von dem sie weiter fortgepflanzt wird, umfassen, zum Erhalten von Ausgangsparametern (31) durch das Finden einer entsprechenden Reihe in einer Nachschlagetabelle (24, 24a-n) unter Verwendung der Eingangsparameter als eines Schlüssels, wobei die Nachschlagetabelle (24, 24a-n) für alle Kombinationen von Eingangsparametern anwendbar ist und eine flexible Möglichkeit zum Definieren einer Funktion f für Ausgangsparameter vorsieht, wobei die Nachschlagetabelle eine aus einer Vielzahl von vordefinierten Nachschlagetabellen (24a-n) ist, die ausgewählt wird, um für den entsprechenden mittleren Knoten (3) aktiv zu sein, und wobei die Auswahl der Funktion unter Verwendung einer aus der Vielzahl von vordefinierten Nachschlagetabellen (24, 24a-n) für alle mittleren Knoten (3) gleich und separat für jede Ebene in der Hierarchie oder separat für jeden einzelnen mittleren Knoten (3) durchgeführt wird, und zum Vorsehen der Ausgangsparameter (31), wobei die Ausgangsparameter den Wählbarkeitsparameter, die Planungspriorität und/oder die fortgepflanzte Priorität umfassen, zu dem Knoten (28) einer höheren Priorität, wobei der Wählbarkeitsparameter berechnet wird durch das Durchführen einer UND-Operation einer Wählbarkeit aus der entsprechenden Reihe der Nachschlagetabelle und eines Eingangswählbarkeitsparameters des gewinnenden Knotens und wobei, wenn der Knoten einer höheren Ebene ein mittlerer Knoten (3) ist, wenigstens ein Teilsatz der Ausgangsparameter angeordnet ist, um als Eingangsparameter für den Knoten (28) der höheren Ebene verwendet zu werden.

10. Netzwerkverkehrsplaner (1) nach Anspruch 9, wobei die Eingangsparameter weiterhin Interner-Zustand-Parameter (25) des entsprechenden mittleren Knotens umfassen.

11. Computerprogramm (51) für einen Netzwerkverkehrsplaner zum Auswählen eines gewinnenden Eingangsknotens, wobei der Netzwerkverkehrsplaner eine logische Hierarchie von Knoten umfasst, die umfassen: eine Vielzahl von Eingangsknoten (5), einen Ausgangsknoten (2) auf einer höchsten Ebene der Hierarchie, eine Vielzahl von mittleren Knoten (3), wobei ein Teilsatz der mittleren Knoten mittlere Knoten (3), die mit wenigstens einem Knoten (27a-i) einer niedrigeren Ebene und einem Knoten (28) einer höheren Ebene verbunden sind, umfasst, wobei das Computerprogramm einen Computerprogrammcode umfasst, der bei einer Ausführung an dem Netzwerkverkehrsplaner den Netzwerkverkehrsplaner veranlasst, die folgenden Schritte durchzuführen:
Auswählen (40) eines Knotens einer niedrigeren Ebene als eines gewinnenden Knotens für das Weiterleiten an den Knoten (28) einer höheren Ebene, wobei das Auswählen bewerkstelligt wird, indem einer oder mehrere eines Satzes von Eingangsparametern (40), die von wenigstens einem Knoten einer niedrigeren Ebene empfangen werden, verwendet werden, und wobei die Eingangsparameter einen Auswählbarkeitsparameter, eine Planungspriorität und/oder eine fortgepflanzte Priorität umfassen, wobei die fortgepflanzte Priorität zu dem Knoten (28) einer höheren Ebene fortgepflanzt wird,
Erhalten des Satzes von Eingangsparametern (41), wobei die Eingangsparameter Eingangsdaten, die mit dem gewinnenden Knoten assoziiert sind, umfassen,
Erhalten von Ausgangsparametern (42) durch das Finden einer entsprechenden Reihe in einer Nachschlagetabelle (24, 24a-n) unter Verwendung der Eingangsparameter als eines Schlüssels, wobei die Nachschlagetabelle (24, 24a-n) für alle Kombinationen von Eingangsparametern anwendbar ist und eine flexible Möglichkeit zum Definieren einer Funktion f für Ausgangsparameter vorsieht, wobei die Nachschlagetabelle eine aus einer Vielzahl von vordefinierten Nachschlagetabellen (24a-n) ist, die ausgewählt werden, um für den entsprechenden mittleren Knoten (3) aktiv zu sein, und wobei die Auswahl der Funktion unter Verwendung einer aus der Vielzahl von vordefinierten Nachschlagetabellen (24, 24a-n) für alle mittleren Knoten (3) gleich und separat für jede Ebene in der Hierarchie oder separat für jeden einzelnen mittleren Knoten (3) durchgeführt wird, und
Vorsehen der Ausgangsparameter (43), wobei die Ausgangsparameter den Wählbarkeitsparameter, die Planungspriorität und/oder die fortgepflanzte Priorität umfassen, zu dem Knoten (28) einer höheren Priorität, wobei der Wählbarkeitsparameter berechnet wird durch das Durchführen einer UND-Operation einer Wählbarkeit aus der entsprechenden Reihe der Nachschlagetabelle und eines Eingangswählbarkeitsparameters des gewinnenden Knotens und wobei, wenn der Knoten einer höheren Ebene ein mittlerer Knoten (3) ist, wenigstens ein Teilsatz der Ausgangsparameter als Eingangsparameter für den Knoten (28) der höheren Ebene verwendet wird.

12. Computerprogrammprodukt (50), das ein Computerprogramm (51) gemäß dem Anspruch 11 und ein computerlesbares Medium, auf dem das Computerprogramm gespeichert ist, umfasst.

## Revendications

1. Procédé pour un programmateur de trafic de réseau dans le but de sélectionner un noeud d'entrée gagnant, le programmateur de trafic de réseau comprenant une hiérarchie logique de noeuds comprenant : une pluralité de noeuds d'entrée (5), un noeud de sortie (2) au sommet de la hiérarchie, une pluralité de noeuds intermédiaires (3), un sous-ensemble des noeuds intermédiaires comprenant des noeuds intermédiaires (3) connectés à au moins un noeud de niveau inférieur (27a à i) et à un noeud de niveau supérieur (28), le procédé comprenant les étapes suivantes, destinées à chacun des noeuds intermédiaires du sous-ensemble :
la sélection (40) d'un noeud de niveau inférieur comme noeud gagnant à transférer vers le noeud de niveau supérieur (28), la sélection étant effectuée en utilisant un ou plusieurs paramètres d'un ensemble de paramètres d'entrée (40) reçus en provenance d'au moins un noeud de niveau inférieur, et les paramètres d'entrée comprenant au moins l'un d'un paramètre d'éligibilité, d'une priorité de programmation et d'une priorité propagée, la priorité propagée étant distribuée au noeud de niveau supérieur (28),
la récupération de l'ensemble de paramètres d'entrée (41), les paramètres d'entrée comprenant des données d'entrée associées au noeud gagnant,
la récupération de paramètres de sortie (42) en trouvant une rangée de correspondance dans une table de consultation (24, 24a à n) utilisant les paramètres d'entrée comme clé, la table de consultation (24, 24a à n) étant applicable pour toutes les combinaisons de paramètres d'entrée et procurant un procédé souple de définition d'une fonction f pour les paramètres de sortie, la table de consultation (24, 24a à n) étant l'une d'une pluralité de tables de consultation (24a à n) prédéfinies, sélectionnée pour être active pour le noeud intermédiaire (3) respectif, et la sélection de fonction utilisant l'une de la pluralité de tables de consultation (24, 24a à n) prédéfinies étant effectuée de manière uniforme pour tous les noeuds intermédiaires (3) séparément pour chaque niveau dans la hiérarchie ou bien séparément pour chaque noeud intermédiaire (3) individuel, et
la fourniture des paramètres de sortie (43), les paramètres de sortie comprenant au moins l'un du paramètre d'éligibilité, de la priorité de programmation et de la priorité propagée, vers le noeud de niveau supérieur (28), le paramètre d'éligibilité étant calculé en effectuant une opération logique ET d'éligibilité à partir de la rangée de correspondance de la table de consultation et d'un paramètre d'éligibilité en entrée du noeud gagnant, et où, lorsque le noeud de niveau supérieur est un noeud intermédiaire (3), un sous-ensemble au moins des paramètres de sortie est utilisé comme paramètres d'entrées pour le noeud de niveau supérieur (28).

2. Procédé selon la revendication 1, dans lequel, lors de l'étape de récupération de paramètres de sortie, la table de consultation est une table librement configurable.

3. Procédé selon l'une quelconque des revendications précédentes, dans lequel les paramètres d'entrée comprennent un paramètre de seau à jetons minimal et un paramètre de seau à jetons maximal.

4. Procédé selon l'une quelconque des revendications précédentes, dans lequel chacun des noeuds d'entrée (5) correspond à un noeud de paquets.

5. Procédé selon l'une quelconque des revendications précédentes, dans lequel, lors de l'étape (41) de récupération d'un ensemble de paramètres d'entrée, les paramètres d'entrée comprennent en outre des paramètres d'état interne (25) du noeud intermédiaire respectif.

6. Procédé selon la revendication 5, comprenant en outre l'étape, pour chacun des noeuds intermédiaires du sous-ensemble, consistant à mettre à jour le paramètre d'état interne (25) en raison de la sélection du noeud d'entrée gagnant dans le programmateur de trafic de réseau entier.

7. Procédé selon la revendication 5 ou la revendication 6, comprenant en outre l'étape, pour chacun des noeuds intermédiaires du sous-ensemble, consistant à mettre à jour les paramètres d'état interne (25) lorsqu'un noeud gagnant de niveau inférieur est sélectionné.

8. Procédé selon l'une quelconque des revendications précédentes, dans lequel tous les noeuds d'entrée sont utilisés sur un seul niveau d'entrée (15) de la hiérarchie.

9. Programmateur de trafic de réseau (1) agencé pour sélectionner un noeud d'entrée gagnant (2), le programmateur de trafic de réseau comprenant une hiérarchie logique de noeuds comprenant :
une pluralité de noeuds d'entrée (5),
un noeud de sortie (2) au niveau supérieur de la hiérarchie,
une pluralité de noeuds intermédiaires (3), un sous-ensemble des noeuds intermédiaires comprenant des noeuds intermédiaires (3) connectés à au moins un noeud de niveau inférieur (27a à i) et à un noeud de niveau supérieur (28), chacun des noeuds intermédiaires (3) du sous-ensemble comprenant respectivement :
un module de programmation (20) agencé pour sélectionner un noeud de niveau inférieur (27a à i) comme noeud gagnant à transférer vers le noeud de niveau supérieur (28), la sélection étant effectuée en utilisant un ou plusieurs paramètres d'un ensemble de paramètres d'entrée (40) reçus en provenance d'au moins un noeud de niveau inférieur, et les paramètres d'entrée comprenant au moins l'un d'un paramètre d'éligibilité, d'une priorité de programmation et d'une priorité propagée, la priorité propagée étant distribuée au noeud de niveau supérieur (28),
un module de calcul d'état (22) agencé pour : récupérer l'ensemble de paramètres d'entrée, les paramètres d'entrée comprenant des données d'entrée associées au noeud gagnant, les paramètres d'entrée comprenant une priorité propagée qui est distribuée vers le noeud de niveau supérieur à partir duquel elle est encore propagée ; récupérer des paramètres de sortie (31) en trouvant une rangée de correspondance dans une table de consultation (24, 24a à n) utilisant les paramètres d'entrée comme clé, la table de consultation (24, 24a à n) étant applicable pour toutes les combinaisons de paramètres d'entrée et procurant un procédé souple de définition d'une fonction f pour les paramètres de sortie, la table de consultation (24, 24a à n) étant l'une d'une pluralité de tables de consultation (24a à n) prédéfinies, sélectionnée pour être active pour le noeud intermédiaire (3) respectif, et la sélection de fonction utilisant l'une de la pluralité de tables de consultation (24, 24a à n) prédéfinies étant effectuée de manière uniforme pour tous les noeuds intermédiaires (3) séparément pour chaque niveau dans la hiérarchie ou bien séparément pour chaque noeud intermédiaire (3) individuel ; et fournir les paramètres de sortie (31), les paramètres de sortie comprenant au moins l'un du paramètre d'éligibilité, de la priorité de programmation et de la priorité propagée, vers le noeud de niveau supérieur (28), le paramètre d'éligibilité étant calculé en effectuant une opération logique ET d'éligibilité à partir de la rangée de correspondance de la table de consultation et d'un paramètre d'éligibilité en entrée du noeud gagnant, et où, lorsque le noeud de niveau supérieur est un noeud intermédiaire (3), un sous-ensemble au moins des paramètres de sortie est agencé pour qu'ils soient utilisés comme paramètres d'entrées pour le noeud de niveau supérieur (28).

10. Programmateur de trafic de réseau (1) selon la revendication 9, dans lequel les paramètres d'entrée comprennent en outre des paramètres d'état interne (25) du noeud intermédiaire respectif.

11. Programme informatique (51) destiné à un programmateur de trafic de réseau destiné à sélectionner un noeud d'entrée gagnant, le programmateur de trafic de réseau comprenant une hiérarchie logique de noeuds comprenant : une pluralité de noeuds d'entrée (5), un noeud de sortie (2) au niveau supérieur de la hiérarchie, une pluralité de noeuds intermédiaires (3), un sous-ensemble des noeuds intermédiaires comprenant des noeuds intermédiaires (3) reliés à au moins un noeud de niveau inférieur (27a à i) et à un noeud de niveau supérieur (28), le programme informatique comprenant un code informatique qui, lorsqu'il est exécuté sur le programmateur de trafic de réseau, amène le programmateur de trafic de réseau à effectuer les étapes suivantes :
la sélection (40) d'un noeud de niveau inférieur comme noeud gagnant à transférer vers le noeud de niveau supérieur (28), la sélection étant effectuée en utilisant un ou plusieurs paramètres d'un ensemble de paramètres d'entrée (40) reçus en provenance d'au moins un noeud de niveau inférieur, et les paramètres d'entrée comprenant au moins l'un d'un paramètre d'éligibilité, d'une priorité de programmation et d'une priorité propagée, la priorité propagée étant distribuée au noeud de niveau supérieur (28),
la récupération de l'ensemble de paramètres d'entrée (41), les paramètres d'entrée comprenant des données d'entrée associées au noeud gagnant,
la récupération de paramètres de sortie (42) en trouvant une rangée de correspondance dans une table de consultation (24, 24a à n) utilisant les paramètres d'entrée comme clé, la table de consultation (24, 24a à n) étant applicable pour toutes les combinaisons de paramètres d'entrée et procurant un procédé souple de définition d'une fonction f pour les paramètres de sortie, la table de consultation étant l'une d'une pluralité de tables de consultation (24a à n) prédéfinies, sélectionnée pour être active pour le noeud intermédiaire (3) respectif, et la sélection de fonction utilisant l'une de la pluralité de tables de consultation (24, 24a à n) prédéfinies étant effectuée de manière uniforme pour tous les noeuds intermédiaires (3) séparément pour chaque niveau dans la hiérarchie ou bien séparément pour chaque noeud intermédiaire (3) individuel, et
la fourniture des paramètres de sortie (43), les paramètres de sortie comprenant au moins l'un du paramètre d'éligibilité, de la priorité de programmation et de la priorité propagée, vers le noeud de niveau supérieur (28), le paramètre d'éligibilité étant calculé en effectuant une opération logique ET d'éligibilité à partir de la rangée de correspondance de la table de consultation et d'un paramètre d'éligibilité en entrée du noeud gagnant, et où, lorsque le noeud de niveau supérieur est un noeud intermédiaire (3), un sous-ensemble au moins des paramètres de sortie est utilisé comme paramètres d'entrées pour le noeud de niveau supérieur (28).

12. Produit de programme informatique (50) comprenant un programme informatique (51) conforme à la revendication 11 et un moyen pouvant être lu par ordinateur sur lequel est stocké le programme informatique.
